# EUROPEAN PATENT APPLICATION

(11) **EP 4 105 806 A1**
(43) Date of publication of application: **21.12.2022**
(21) Application number: 21305815.9
(22) Date of filing: 14.06.2021
(51) Int. Cl.: G06F 21/62, G06Q 30/02

(54) **METHOD FOR PRIVACY PRESERVING RETARGETING OF A USER**

(71) Applicant: Thales DIS France SA, 92190 Meudon (FR)
(72) Inventor: GOUGET, Aline, 92190 Meudon (FR); MARTINENT, Frédéric, 92190 Meudon (FR)
(74) Representative: Bricks, Amélie

(57) **Abstract**

The present invention relates to a method for privacy preserving retargeting of a user (Uₖ) among a plurality of users in a digital advertising system comprising at least one publisher (P₁, P_{2,...} ), at least one advertiser (A₁,A₂,... ) and a matching server configured to be connected to the publishers and advertisers using a network, wherein :
- each user of said plurality of users is identifiable said publishers and said advertisers, said publishers and said advertisers having access to a first identifier of the user,
- each publisher (Pi) has access to a publisher secret key and is able to identify each user of said plurality of users using a second identifier generated from said first identifier of said user and said publisher secret key,
- each advertiser (Aⱼ) has access to an advertiser secret key and is able to identify each user of said plurality of users using a third identifier generated from said first identifier of said user and said advertiser secret key,
- said matching server stores, for each user of said plurality of users, and for each publisher (Pi) and each advertiser (Aj), matching data enabling the matching server, at an online phase during which a user connects to a publisher, to provide an advertiser with a third identifier of said user, generated from an advertiser secret key of said advertiser, which matches a second identifier of said user generated from a publisher secret key of said publisher, said matching data being determined by using a fourth identifier obtained by encrypting said third identifier with said secret key of said publisher or by encrypting said second identifier with said secret key of said advertiser, said method being performed by said matching server and comprising in the **online phase** wherein a current user (U_{c}) connects to a publisher (Pi):
∘ receiving (S10) a second current identifier of said current user (U_{c}) from said publisher (Pi),
∘ determining (S11), based on said matching data, a third identifier, generated from a first identifier of said current user and from an advertiser secret key of an advertiser, matching the second current identifier,
∘ sending (S12) said matching third identifier to said advertiser, such that the current user may be targeted by said advertiser.

## Description

### FIELD OF THE INVENTION

The present invention relates to the field of user identification and more particularly to a method for retargeting a user in digital advertising system while preserving the privacy of its personal data.

### BACKGROUND OF THE INVENTION

For many years, many online digital services such mailing services, online storage, social networks etc... are provided for free. In exchange, users are required to watch digital advertisement, which generates revenues funding such online services.

A key to an efficient advertising is targeted advertising, that is to say the ability of advertisers to provide users with selected advertisement maximizing the probability that users converts the advertisement into a purchase generating revenue for the advertiser. Such a targeting of users relies on the capability of advertisers to identify a user displaying a webpage, application or software of a publisher hosting an advertisement spaced to be filed with an advertisement of the advertiser.

Up to now, identification of users has been based on third party cookies enabling publishers, advertisers and all intermediaries to share with each other identifiers and personal data of the users. When a user connects to an advertiser, the advertiser stores on the user's device a file, called a cookie, saving information about the user such as an identifier of the user. When the same user later visits the website of a publisher, this publisher sells at auction to advertisers some advertising space on the publisher's page or application displayed by the user. The publisher transmits to the advertisers bid requests including the user third party cookies such that they may identify him and determine if he is an interesting target for advertisement.

Recently, concern has grown among users and regulators about the privacy of users' personal data. More and more major software providers, including web browsers providers, plan to forbid third party cookies in order to ensure the privacy of personal data of their users.

Consequently, there is a need for a technical solution enabling an advertiser to identify a particular user among its customers when this user connects to a publisher, without sharing any personal data between the publisher and the advertiser.

### SUMMARY OF THE INVENTION

For this purpose and according to a first aspect, this invention therefore relates to a method for privacy preserving retargeting of a user among a plurality of users in a digital advertising system comprising at least one publisher, at least one advertiser and a matching server configured to be connected to the publishers and advertisers using a network,
wherein :
- each user of said plurality of users is identifiable by said publishers and said advertisers, said publishers and said advertisers having access to a first identifier of the user,
- each publisher has access to a publisher secret key and is able to identify each user of said plurality of users using a second identifier generated from said first identifier of said user and said publisher secret key,
- each advertiser has access to an advertiser secret key and is able to identify each user of said plurality of users using a third identifier generated from said first identifier of said user and said advertiser secret key,
- said matching server stores, for each user of said plurality of users, and for each publisher and each advertiser, matching data enabling the matching server, at an online phase during which a user connects to a publisher, to provide an advertiser with a third identifier of said user, generated from an advertiser secret key of said advertiser, which matches a second identifier of said user generated from a publisher secret key of said publisher, said matching data being determined by using a fourth identifier obtained by encrypting said third identifier with said secret key of said publisher or by encrypting said second identifier with said secret key of said advertiser, said method being performed by said matching server and comprising in the **online phase** wherein a current user connects to a publisher:
   ∘ receiving a second current identifier of said current user from said publisher,
   ∘ determining, based on said matching data, a third identifier, generated from a first identifier of said current user and from an advertiser secret key of an advertiser, matching the second current identifier,
   ∘ sending said matching third identifier to said advertiser, such that the current user may be targeted by said advertiser.

Such a method enables the matching server, when a user connects to a publisher, to provide the advertisers with information allowing to recognize the relevant users for them, without itself having any knowledge of the identity of the user.

In an embodiment, for a publisher Pᵢ and an advertiser Aⱼ: said second identifier generated from said first identifier of said user Uₖ and said secret key of the publisher Pᵢ is H(IDₖ)^{sk_Pi}, said third identifier generated from said first identifier of said user Uₖ and said secret key of the advertiser Aⱼ is H(IDₖ)^{sk_Aj} and said fourth identifier is H(IDₖ)^{sk_Aj*sk_Pi}, with H a one-way function.

In a first embodiment, the method according to the first aspect may comprise an enrollment phase comprising :
∘ receiving from each publisher a first encrypted list comprising said second identifiers of the plurality of users,
∘ sending said first encrypted lists to said advertisers,
∘ receiving from each advertiser second encrypted lists comprising said fourth identifiers of the users obtained by said advertiser by encrypting the sent first encrypted lists with the secret key of said advertiser,
∘ receiving from each advertiser a third encrypted list comprising said third identifiers of the users,
∘ sending said third encrypted lists to publishers ,
∘ receiving from each publisher fourth encrypted lists comprising said fourth identifiers of the users obtained by said publisher by encrypting the sent third encrypted lists with the secret key of said publisher,
∘ determining for each user, advertiser and publisher, matching data indicative of each match between a received second identifier and third identifier both corresponding to a same fourth identifier of the user, and storing said matching data.

Such a method enables the matching server, at the end of the enrollment step, to establish a correspondence between the second and third identifiers of each user, and to use it later, when a user connects to a publisher, to determine for each advertiser an identifier of this user which is understandable by the advertiser.

In a second embodiment, the method according to the second aspect may comprise :
- an enrollment phase comprising :
   ∘ receiving from each advertiser a first encrypted list comprising said third identifiers of the plurality of users,
   ∘ sending said first encrypted lists comprising said third identifiers to said publishers,
   ∘ receiving from each publisher second encrypted lists comprising said fourth identifiers of the users obtained by said publisher by encrypting the sent first encrypted lists with the secret key of said publisher,
   ∘ storing for each user, publisher and identifier, matching data associating the received third identifier with the received fourth identifier of the user,
      - and : the step of said online phase, wherein a current user connects to a publisher, determining based on said matching data a third identifier may comprise :
         ∘ sending said received second current identifier to each advertiser,
         ∘ receiving from each advertiser a fourth identifier of the user generated from a first identifier of said current user and an advertiser secret key of said advertiser,
         ∘ determining, the third identifier associated to the received fourth identifier of the user in said matching data.

Such a method enables to minimize the amount of computation and data transmission to be performed during the enrollment phase, while still enabling the matching server at the online phase to determine for each advertiser an identifier of the current user which is understandable by the advertiser.

Said first identifier of a user may be an email address.

According to a second aspect, this invention therefore relates also to a computer program product directly loadable into the memory of at least one computer, comprising software code instructions for performing the steps of the method according to the first aspect when said product is run on the computer.

According to a third aspect, the invention is also related to a matching server configured to be connected to publishers and advertisers using a network comprising a processor and an input-output interface configured to perform the steps of the method according to the first aspect.

According to a fourth aspect, the invention is also related to a digital advertising system comprising at least one publisher, at least one advertiser and a matching server configured to be connected to the publishers and advertisers using a network configured to perform the steps of the method according to the first aspect.

### BRIEF DESCRIPTION OF THE DRAWINGS

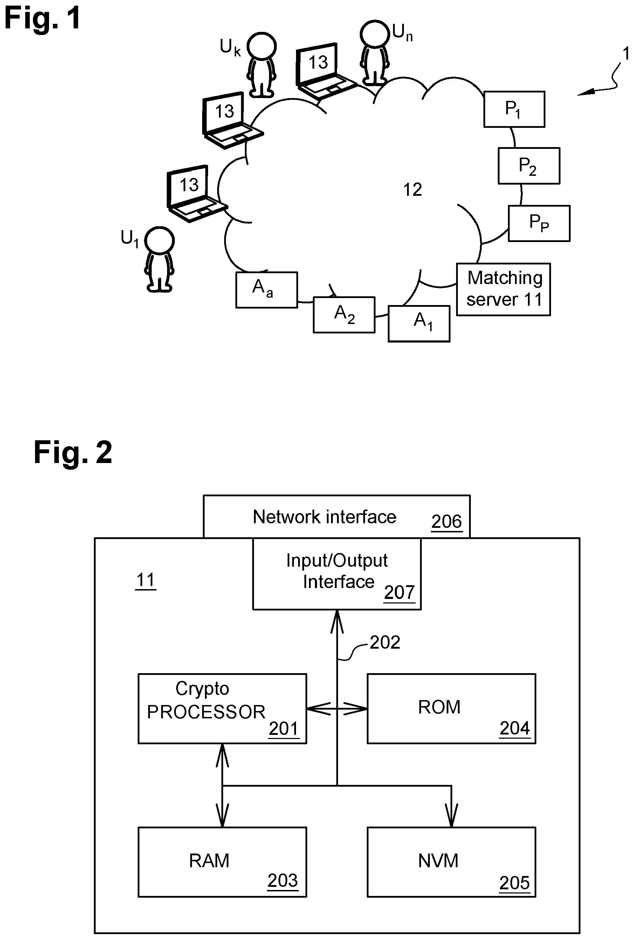

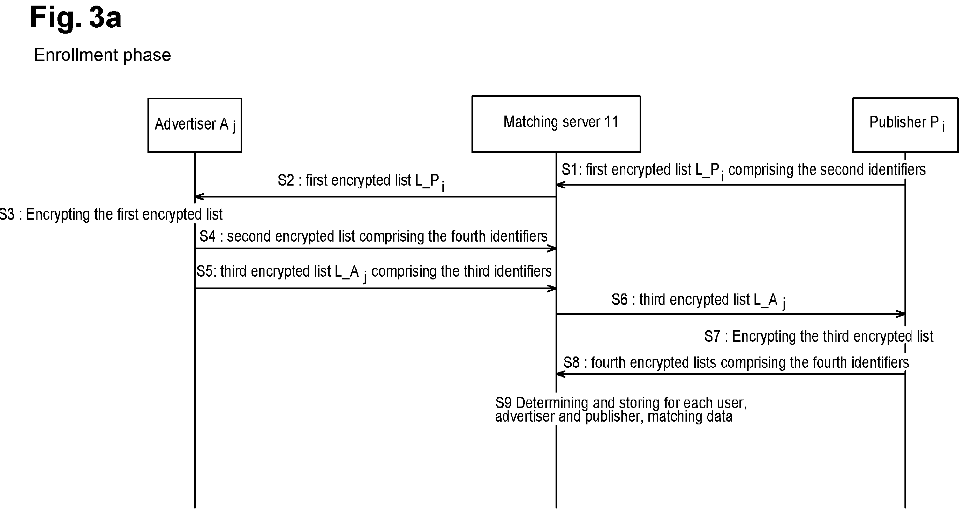

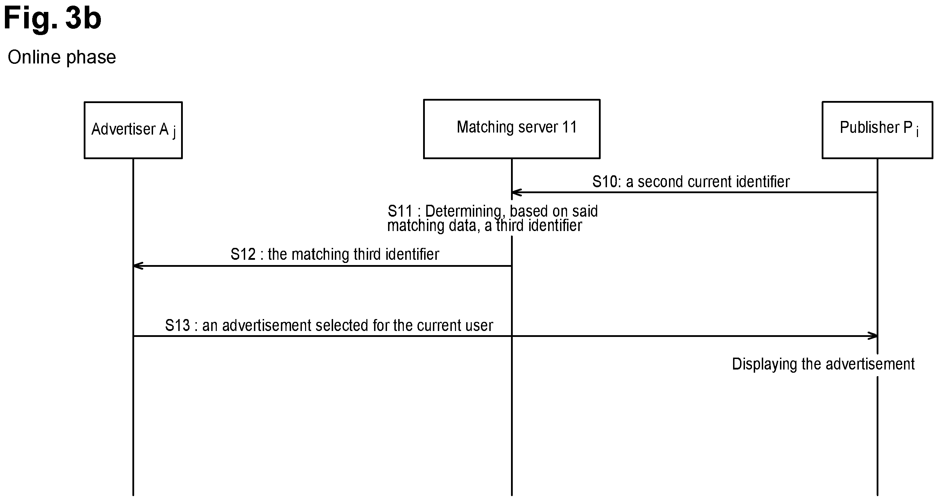

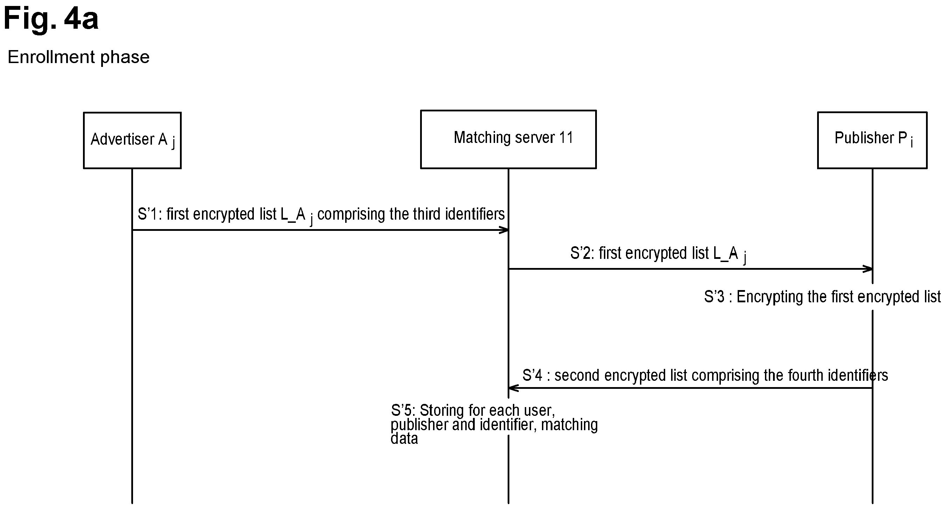

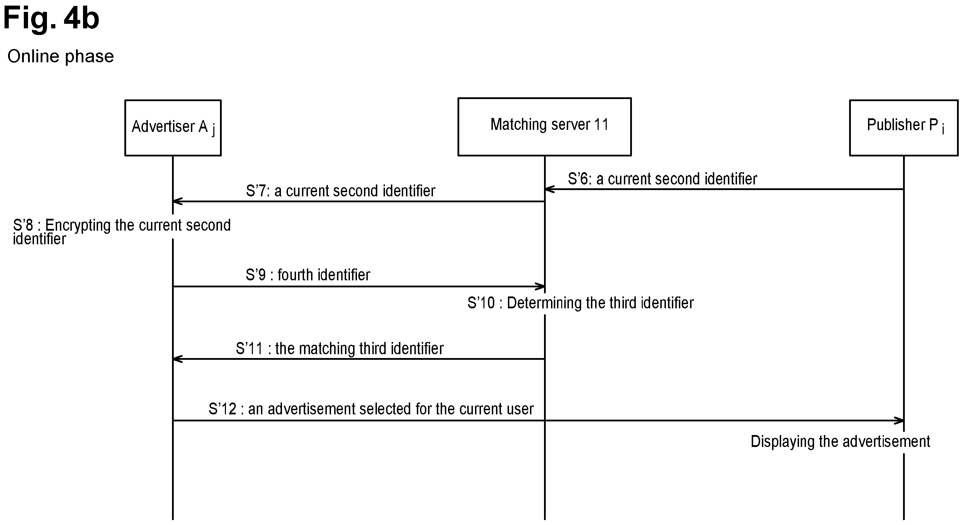

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
▪ Figure 1 is a schematic illustration of a system according to an embodiment of the present invention;
▪ Figure 2 is a schematic illustration of a matching server according to an embodiment of the present invention;
▪ Figure 3a et 3b illustrate schematically a method for privacy preserving retargeting of a user comprises an enrollment phase and an online phase according to a first embodiment of the present invention;
▪ Figure 4a et 4b illustrate schematically a method for privacy preserving retargeting of a user comprises an enrollment phase and an online phase according to a second embodiment of the present invention;

### DETAILED DESCRIPTION OF EMBODIMENTS OF THE INVENTION

The invention relates to a method enabling an advertiser of a digital advertising system to retarget a user when this user connects to a publisher belonging to this digital advertising system, while at the same preserving the privacy of personal data of this user such as his name, gender, age, address, email address, picture...

As shown on **Figure 1**, such a digital advertising system 1 comprises at least one publisher P₁, P₂, ... Pₚ and at least one advertiser A₁, A₂... Aₐ with p and a integers. It also includes a matching server 11 connected to the publishers and advertisers using a network 12.

A plurality of users U₁, ..., Uₖ, ..., Uₙ with n an integer, can be identified by at least one of the publishers and one of the advertisers. For example a user can be identified by a publisher or an advertiser because he has registered. When a user Uₖ is registered to a publisher or an advertiser, he has provided various information, including personal information, for example by creating an account and the publisher or advertiser becomes available to identify him using a first identifier of the user, such as a pseudonym or an email address. In the rest of the description, the first identifier of a user Uₖ is noted IDₖ. Therefore, it is supposed that publishers and advertisers have access to such a first identifier of all the users who are registered to them, for example by storing it in an internal or remote storage after user's registration. The user can also be identified by a publisher after the mobile OS of his phone has provided a publisher mobile app with an identifier of the user, without explicit registration of the user to the publisher. In the rest of the description, a user will be considered as "registered" to another entity when this entity has access to an identifier of the user, even if no explicit registration of the user to this entity has been performed.

Users interact with the publishers by displaying publisher's content on a user device 13, such as a computer, a smartphone, a tablet etc... connected to the network 12. Such content may for example be a website page or content displayed in a mobile application. Publisher's content may include areas dedicated to displaying advertisement provided by advertisers. Such advertisement may be in various formats such as text, banners with pictures, videos, social media content etc... Such publisher's content and advertisers' content may for example be hosted on a publisher's/advertiser's web server connected to the network 12 or in a cloud infrastructure belonging to the network 12.

The aim of the invention is, when a user visits a publisher's site or application, and has registered to it, to enable advertisers to which the user has also registered to retarget the user by displaying ads specific to that user on the publisher page displayed by the user.

In order to do so, the matching server is used to check the identifier of the user, provided by the publisher, against the identifiers of the users registered to an advertiser and to inform the advertiser of a match. In order to preserve the privacy of the user, no personal information of the user, including its first identifier, shall neither be leaked to the matching sever nor exchanged between the advertiser and the publisher.

**Figure 2** is a schematic illustration of a matching server 11. It may include computation means such as a CPU or a cryptoprocessor 201 connected via a bus 202 to a random access memory (RAM) 203, a read-only memory (ROM) 204, and/or a non-volatile memory (NVM) 205. The matching server may further include a network interface 206 used to connect it to the network 12. It may be a wireless interface, such as a WiFi interface or a wired network interface such as an Ethernet interface. The matching server may also include an input/output interface 207 providing interfaces to an administrator of the matching server, such as one or more screens, loudspeakers, a mouse, tactile surfaces, a keyboard etc...

In order to protect the privacy of the users registered to it, each publisher Pᵢ, with i in {1, ..., p}, p being an integer, has access to a publisher secret key sk_Pᵢ. In addition to identifying any registered user Uₖ, k in {1, ..., n}, n being an integer, from his first identifier IDₖ, each publisher is able to identify him using a second identifier generated from the first identifier and its publisher secret key sk_Pᵢ. Instead of the first identifier of the user which is unique, each user may have a different second identifier for each publisher since it depends on the publisher secret key. For example, such a second identifier may be the result of an encryption using the publisher secret key of a hash of the first identifier. As an example, when such an encryption is performed by an exponentiation, the second identifier of a user Uₖ for a publisher Pᵢ may be equal to H(IDₖ)^{sk_Pi} with H a one-way function.

Similarly, in order to protect the privacy of the users registered to it, each advertiser Aⱼ, with j in {1, ..., a}, a being an integer, has access to an advertiser secret key sk_Aᵢ. In addition to identifying any registered user Uₖ, k in {1, ..., n} from his first identifier IDₖ, each advertiser is able to identify him using a third identifier generated from the first identifier and its advertiser secret key sk_Aᵢ. Instead of the first identifier of the user, which is unique, each user may have a different third identifier for each advertiser since it depends on the advertiser secret key. For example, such a third identifier may be the result of an encryption using the advertiser secret key of a hash of the first identifier. As an example, when such an encryption is performed by an exponentiation, the third identifier of a user Uₖ for an advertiser Ai may be equal to H(IDₖ)^{sk_Ai}.

The invention uses the matching server to check the identifier of a user, provided by a publisher, against the identifiers of the users registered to advertisers and to inform them of a match. Nevertheless, in order to protect users' privacy, no first identifier of any user shall be exchanged between the publishers, advertisers and the matching server. Instead, users shall only be identified by their publisher-specific second identifiers or their advertiser-specific third identifiers and the matching server shall be able to match the second identifier of a user, specific to a publisher the user is connected to, with the third identifiers of the same user specific to advertisers the user is registered at.

In order to enable the matching server to do so, it needs additional data. A first main idea of the invention is, during an enrollment phase, to make publishers and advertisers exchange with the matching server data about their registered users. From these data, the matching server shall determine matching data enabling it later, for a given user and a (publisher, advertiser) pair, to match the publisher-specific second identifier of the user to the advertiser-specific third identifier of the user.

A problem is that without knowledge of the secret keys used to generate to second and third identifiers, or of associated decryption keys, the matching server cannot directly establish a correspondence between these identifiers of the same user. The second main idea of the invention is to compute, based on the second and third identifiers of a user, a common fourth identifier binding these, and to have the matching server determine matching data for a given user and a (publisher, advertiser) pair based on this fourth identifier. This fourth identifier of the user is obtained for a given user and a (publisher, advertiser) pair by encrypting the advertiser-specific third identifier of the user with the secret key of the publisher or by encrypting the publisher-specific second identifier of the user with the secret key of the advertiser.

The next paragraphs describe in more details embodiments for the generation of the matching data in an enrollment phase and how they are used in a subsequent online phase to enable retargeting of a user.

These paragraphs describe the case where a group of one or more publishers P₁, ... P_{q} and a group of one or more advertisers A₁, ..., A_{b} are considered, with q and b non-zero integers. In this case, a group of users U₁, ..., Uₘ with m a non-zero integer are all registered to all the publishers P₁, ... P_{q} and the advertisers A₁, ..., A_{b}. Of course, some or all of these users may be registered to other publishers and/or advertisers, and additional users may be registered to one or more of the publishers P₁, ... P_{q} and the advertisers A₁, ..., A_{b}.

In first embodiment, the amount of calculations to be performed in the online phase is minimized.

As depicted on **Figure 3a****,** this embodiment comprises the following steps in an enrollment phase.

In a first reception step S1, the matching server receives from each publisher Pᵢ with i in {1,..., q} a first encrypted list (L_Pᵢ) comprising the second identifiers, for example H(IDₖ)^{sk_Pi} with k in {1,...,m}, of the users U₁, ..., Uₘ.

In a first transmission step S2, the matching server sends the received first encrypted lists to each advertiser Aj with j in {1, ..., b}.

In a first encryption step S3, each advertiser Aj encrypts the elements of the received first encrypted lists with its advertiser secret key sk_Aⱼ. By doing so, each advertiser obtains for each publisher Pi a list of the fourth identifiers of the users registered to the publisher, for example equal to H(IDₖ)^{sk_Pi*sk_Aj}. The advertisers then send it back to the matching server.

In a second reception step S4, the matching server receives from each advertiser Aⱼ second encrypted lists comprising the fourth identifiers, for example equal to H(IDₖ)^{sk_Pi*sk_Aj}, of the users registered to each publisher Pᵢ, obtained by this advertiser Aⱼ by encrypting the elements of sent first encrypted lists L_Pᵢ with the secret key of the advertiser sk_Aⱼ. At this stage, the matching server can match for each user of each publisher, the second identifier, for example H(IDₖ)^{sk_Pi}, of this user for a given publisher Pᵢ and the fourth identifier, for example H(IDₖ)^{sk_Pi*sk_Aj}, of this user for this publisher and a given advertiser Aⱼ.

In a third reception step S5, the matching server receives from each advertiser Aⱼ a third encrypted list L_Aj comprising the third identifiers, for example H(IDₖ)^{sk_Aj} of the users registered to the advertiser Aj.

In a second sending step S6, the matching server sends the received third encrypted lists L_Aj to all the publisher Pᵢ.

In a second encryption step S7, each publisher Pi encrypts the elements of the received third encrypted lists with its publisher secret key sk_Pᵢ. By doing so, each publisher obtains for each advertiser Aⱼ a list of the fourth identifiers of the users registered to the advertiser, for example equal to H(IDₖ)^{sk_Aj*sk_Pi}. The advertisers then send it back to the matching server.

In a fourth reception step S8, the matching server receives from each publisher Pᵢ fourth encrypted lists comprising the fourth identifiers, for example equal to H(IDₖ)^{sk_Pi*sk_Aj}, of the users registered to each advertiser Aⱼ, obtained by this publisher Pᵢ by encrypting the elements of sent third encrypted lists L_Aj with the secret key of the publisher sk_Pi. At this stage, the matching server can match for each user of each advertiser, the third identifier, for example H(IDₖ)^{sk_Aj}, of this user for a given advertiser Aⱼ and the fourth identifier, for example H(IDₖ)^{Sk_Pi*Sk_Aj}, of this user for this advertiser and a given publisher Pᵢ.

In a matching data determination step S9, the matching server determines for each user, advertiser and publisher, that is to say for each triplet (Uₖ, Aⱼ, Pᵢ), matching data indicative of each match between a received second identifier, for example H(IDₖ)^{sk_Pj}, and third identifier, for example H(IDₖ)^{sk_Ai}, both corresponding to a same fourth identifier of the user, for example H(IDₖ)^{sk_Ai*sk_Pj}. The matching data then stores the determined matching data. As said earlier, some users may be registered to only part of the advertisers. In such a case, based on these matching data, the matching server is first able to determine from the second identifier of a user if this user is registered to a given advertiser, by checking if the matching data indicate a match between this second identifier and a third identifier for this user and this advertiser. In case of a match, the matching server is even able to provide the identity of the user to the advertiser by providing the third identifier of this user for this advertiser. And the matching server can do both without knowledge of the first identifier of a user.

Such matching may for example be a table storing for each publisher/advertiser pair, the second, third and fourth identifier of each registered user. Alternatively, the matching data may store only the second and third identifiers but not the fourth identifier.

As also depicted on **Figure 3b****,** this embodiment comprises the following steps in the online phase during which a current user U_{c} connects to a publisher Pᵢ.

In a fifth reception step S10, the matching server receives a second identifier of the current user U_{c} from the publisher Pᵢ. This second identifier will be called current second identifier and may be equal to H(ID_{c})^{sk_Pi}.

In a third identifier determination step S11, the matching server determines, based on the matching data stored at the end of the enrollment phase, a third identifier, generated from the first identifier ID_{c} of the current user U_{c} and from the advertiser secret key of an advertiser Aⱼ, matching the second current identifier. The matching server can determine such a matching third identifier for each advertiser to which the current user has registered. Such a match indicates that the advertisers corresponding to the matching third identifiers may be interesting in targeting the user with a targeted advertisement.

In a matching result transmission step S12, the matching server sends the matching third identifier to the advertiser, such that the current user may be targeted by the advertiser.

In a retargeting step S13, the advertiser sends an advertisement selected for the current user to the publisher Pi and the publisher displays it to the current user.

In a second embodiment, the amount of computation to be performed at the enrollment phase is reduced, to the expense of the computations to be performed at the online phase.

As depicted on **Figure 4a****,** this embodiment comprises the following steps in an enrollment phase.

In a first alternative reception step S'1, the matching server receives from each advertiser Aⱼ a first encrypted list L_Aj comprising the third identifiers, for example H(IDₖ)^{sk_Aj} of the users registered to the advertiser Aj.

In a first alternative transmission step S'2, the matching server sends the received first encrypted lists to all the publishers Pᵢ.

In a first alternative encryption step S'3, each publisher Pᵢ encrypts the elements of the received first encrypted lists with its publisher secret key sk_Pi. By doing so, each publisher obtains for each advertiser Aⱼ a list of the fourth identifiers of the users registered to the advertiser, for example equal to H(IDₖ)^{sk_Aj*sk_Pi}. The advertisers then send it back to the matching server.

In a second alternative reception step S'4, the matching server receives from each publisher Pᵢ second encrypted lists comprising the fourth identifiers, for example equal to H(IDₖ)^{sk_Pi*sk_Aj}, of the users registered to each advertiser Aj, obtained by this publisher Pi by encrypting the elements of sent first encrypted lists L_Aj with the secret key of the publisher sk_Pi. At this stage, the matching server can match for each user of each advertiser, the third identifier, for example H(IDₖ)^{sk_Aj}, of this user for a given advertiser Aⱼ and the fourth identifier, for example H(IDₖ)^{sk_Pi*sk_Aj}, of this user for this advertiser and a given publisher Pi.

In an alternative matching data determination step S'5, the matching server stores for each user, advertiser and publisher, that is to say for each triplet (Uₖ, Aⱼ, Pᵢ), matching data associating the received third identifier, for example H(IDₖ)^{sk_Ai}, and the received fourth identifier of the user, for example H(IDₖ)^{sk_Ai*sk_Pj}.

As also depicted on **Figure 4b****,** this embodiment comprises the following steps in the online phase during which a current user U_{c} connects to a publisher Pᵢ.

In a third alternative reception step S'6, the matching server receives a second identifier of the current user U_{c} from the publisher Pᵢ. This second identifier will be called current second identifier and may be equal to H(ID_{c})^{sk_Pi}.

In a second alternative transmission step S'7, the matching server sends the received second identifier of the current user U_{c} to all the advertisers Aj.

In a second alternative encryption step S'8, each advertiser Aj encrypts the second identifier of the current user U_{c} with its advertiser secret key sk_Aⱼ. By doing so, each advertiser obtains the fourth identifier of the current user U_{c}, for example equal to H(ID_{c})^{sk_Pi*sk_Aj}. The advertisers then send it back to the matching server.

In a fourth alternative reception step S'9, the matching server receives from each advertiser Aⱼ the fourth identifier, for example equal to H(ID_{c})^{sk_Pi*sk_Aj}, of the current user, obtained by this advertiser Aⱼ by encrypting the second identifier of the current user U_{c} with its advertiser secret key sk_Aⱼ.

In a third identifier alternative determination step S'10, the matching server determines, based on the matching data stored at the end of the enrollment phase, a third identifier, generated from the first identifier ID_{c} of the current user U_{c} and from the advertiser secret key of an advertiser Aⱼ, associated in the matching data to the fourth identifier of the user received at the fourth alternative reception step S'9. The matching server can determine such a matching third identifier for each advertiser to which the current user has registered. Such a match indicates that the advertisers corresponding to the matching third identifiers may be interesting in targeting the user with a targeted advertisement.

In a matching result alternative transmission step S'11, the matching server sends the matching third identifier to the advertiser, such that the current user may be targeted by the advertiser.

In an alternative retargeting step S'12, the advertiser sends an advertisement selected for the current user to the publisher Pi and the publisher displays it to the current user.

In the retargeting step S13 and the alternative retargeting step S'12, the advertisement may be transmitted via the matching server. The matching server may provide, with the advertisement, the second identifier of the user, so that the publisher knows to which user the advertisement should be displayed.

Alternatively, during the matching result transmission step S12 and the matching result alternative transmission step S'11, the matching server may also provide to the advertiser the second identifier of the current user, and during the retargeting step S13 and the alternative retargeting step S'12, the advertiser may send directly to the publisher the advertisement and the second identifier of the current user.

In order to enable the matching server to determine a match between a received second identifier, for example H(IDₖ)^{sk_Pj}, and third identifier, for example H(IDₖ)^{sk_Ai}, at the matching data determination step S9 or at the third identifier alternative determination step S'10, the fourth identifier, for example H(IDₖ)^{sk_Pi*sk_Aj}, obtained by encrypting a second identifier, for example H(IDₖ)^{sk_Pi}, with an advertiser secret key sk_Aⱼ, at the first encryption step S3 or the first alternative encryption step S'3, shall be equal to the fourth identifier, for example H(IDₖ)^{sk_Aj*sk_Pi}, obtained by encrypting a third identifier, for example H(IDₖ)^{sk_Aj}, with a publisher secret key sk_Pi, at the second encryption step S7 or the first alternative encryption step S'3. In order to achieve such a result, the encryption function used to generate the second identifiers, the third identifiers and the fourth identifiers shall be such that cumulatively encrypting a value with two keys gives the same result whatever the order in which the encryption keys are used. The exponentiation function used as an example of encryption function throughout the description fits this description but any other encryption function having this property could be used instead, such as Elliptic Curve Diffie-Hellman (ECDH) encryption.

As a result, the matching server is able, when a user connects to a publisher, to indicate the identity of this user to all the advertisers to which this user has registered, without having knowledge of the identity of the user. This information from the matching server in turn enables any such advertiser to target the user with a user-specific advertisement to be displayed to the user.

## Claims

1. A method for privacy preserving retargeting of a user (Uₖ) among a plurality of users in a digital advertising system (1) comprising at least one publisher (P₁, P₂,... ), at least one advertiser (A₁,A₂,...) and a matching server (11) configured to be connected to the publishers and advertisers using a network (12),
wherein :
- each user of said plurality of users is identifiable by said publishers and said advertisers, said publishers and said advertisers having access to a first identifier of the user,
- each publisher (Pᵢ) has access to a publisher secret key (sk_Pi) and is able to identify each user of said plurality of users using a second identifier generated from said first identifier of said user and said publisher secret key (H(IDₖ)^{sk_Pi}),
- each advertiser (Aⱼ) has access to an advertiser secret key (sk_Aⱼ) and is able to identify each user of said plurality of users using a third identifier generated from said first identifier of said user and said advertiser secret key (H(IDₖ)^{sk_Aj}),
- said matching server stores, for each user of said plurality of users, and for each publisher (Pᵢ) and each advertiser (Aⱼ), matching data enabling the matching server, at an online phase during which a user connects to a publisher, to provide an advertiser with a third identifier of said user (H(IDₖ)^{sk_Aj}), generated from an advertiser secret key of said advertiser, which matches a second identifier of said user (H(IDₖ)^{sk_Pi}) generated from a publisher secret key of said publisher, said matching data being determined by using a fourth identifier obtained by encrypting said third identifier with said secret key of said publisher or by encrypting said second identifier with said secret key of said advertiser,
said method being performed by said matching server (11) and comprising in the **online phase** wherein a current user (U_{c}) connects to a publisher (Pᵢ):
∘ receiving (S10, S'6) a second current identifier (H(ID_{c})^{sk_Pi}) of said current user (U_{c}) from said publisher (Pᵢ),
∘ determining (S11, S'7, S'8, S'9, S'10), based on said matching data, a third identifier, generated from a first identifier of said current user and from an advertiser secret key of an advertiser, matching the second current identifier,
∘ sending (S12, S'11) said matching third identifier to said advertiser, such that the current user may be targeted by said advertiser.

2. The method of claim 1, wherein, for a publisher Pᵢ and an advertiser Aⱼ:
said second identifier generated from said first identifier of said user Uₖ and said secret key of the publisher Pᵢ is H(IDₖ)^{sk_Pi}, said third identifier generated from said first identifier of said user Uₖ and said secret key of the advertiser Aⱼ is H(IDₖ)^{sk_Aj} and said fourth identifier is H(IDₖ)^{sk_Aj*sk_Pi}, with H a one-way function.

3. The method of claim 1 or 2, comprising an enrollment phase comprising :
∘ receiving (S1) from each publisher (Pᵢ) a first encrypted list (L_Pᵢ) comprising said second identifiers of the plurality of users,
∘ sending (S2) said first encrypted lists to said advertisers,
∘ receiving (S4) from each advertiser (Aⱼ) second encrypted lists comprising said fourth identifiers of the users obtained by said advertiser (Aj) by encrypting the sent first encrypted lists (L_Pᵢ) with the secret key of said advertiser (sk_Aⱼ),
∘ receiving (S5) from each advertiser (Aⱼ) a third encrypted list (L_Aj) comprising said third identifiers of the users,
∘ sending (S6) said third encrypted lists to publisher (Pᵢ),
∘ receiving (S8) from each publisher fourth encrypted lists comprising said fourth identifiers of the users obtained by said publisher by encrypting the sent third encrypted lists with the secret key of said publisher,
∘ determining for each user, advertiser and publisher, matching data indicative of each match between a received second identifier and third identifier both corresponding to a same fourth identifier of the user, and storing said matching data (S9).

4. The method of claim 1 or 2, comprising :
- an enrollment phase comprising :
∘ receiving (S'1) from each advertiser (Aⱼ) a first encrypted list (L_Aj) comprising said third identifiers of the plurality of users,
∘ sending (S'2) said first encrypted lists (L_Aⱼ) comprising said third identifiers to said publishers (Pᵢ),
∘ receiving (S'4) from each publisher (Pᵢ) second encrypted lists comprising said fourth identifiers of the users obtained by said publisher (Pᵢ) by encrypting the sent first encrypted lists (L_Aⱼ) with the secret key of said publisher (sk_Pᵢ),
∘ storing (S'5) for each user, publisher and identifier, matching data associating the received third identifier with the received fourth identifier of the user,
- and wherein : the step of said online phase, wherein a current user (U_{c}) connects to a publisher, determining based on said matching data a third identifier comprises :
∘ sending (S'7) said received second current identifier to each advertiser (Aⱼ),
∘ receiving (S'9) from each advertiser (Aⱼ) a fourth identifier of the user generated from a first identifier of said current user and an advertiser secret key of said advertiser,
∘ determining (S'10), the third identifier associated to the received fourth identifier of the user in said matching data.

5. The method of any one of claims 1 to 4, wherein said first identifier of a user is an email address.

6. A computer program product directly loadable into the memory of at least one computer, comprising software code instructions for performing the steps of any one of claims 1 to 5, when said computer program product is run on the at least one computer.

7. A matching server (11) configured to be connected to publishers and advertisers using a network (12) comprising a processor (201) and an input-output interface (207) configured for performing the method according to any one of claims 1 to 5.

8. A digital advertising system (100) comprising at least one publisher (P₁,P₂,... ), at least one advertiser (A₁,A₂,...) and a matching server configured to be connected to the publishers and advertisers using a network configured for performing the method according to any one of claims 1 to 5.
